# EUROPEAN PATENT APPLICATION

(11) **EP 4 711 206 A1**
(43) Date of publication of application: **18.03.2026**
(21) Application number: 23935986.2
(22) Date of filing: 08.05.2023
(51) Int. Cl.: B60R 1/07

(54) **ADJUSTMENT DEVICE FOR REARVIEW MIRROR, REARVIEW MIRROR ASSEMBLY, VEHICLE AND ADJUSTMENT METHOD FOR REARVIEW MIRROR**

(71) Applicant: Shenzhen Yinwang Intelligent Technologies Co., Ltd., Shenzhen, Guangdong 518110 (CN)
(72) Inventor: ZHANG, Yuchao, Shenzhen, Guangdong 518129 (CN); CAO, Kang, Shenzhen, Guangdong 518129 (CN)
(74) Representative: Thun, Clemens
(86) International application number: PCT/CN2023/092796
(87) International publication number: WO 2024/229657

(57) **Abstract**

An adjustment apparatus (2) for a rearview mirror (3) includes a mirror surface, a support, an input receiving module (21), a motor (22), a control module (23), and a position feedback module (24). The input receiving module (21) receives at least one of a first input (211) indicating adjustment of the mirror surface and a second input (212) indicating adjustment of the support. The motor (22) drives the mirror surface and the support to jointly rotate. The control module (23) is coupled to the input receiving module (21) and the motor (22), and drives, in response to the at least one input, the motor (22) to rotate. The position feedback module (24) is coupled to the motor (22), outputs first data to the control module (23) in response to the motor (22) rotating a predetermined angle based on the first input (211), and outputs second data different from the first data in response to the motor (22) rotating the predetermined angle based on the second input (212). The adjustment apparatus applies different adjustment precision to the adjustment of the mirror surface and the support, to implement high-precision adjustment of the mirror surface without changing recognition precision of a controller. A rearview mirror assembly, a transportation means, and an adjustment method for a rearview mirror are further included.

## Description

### TECHNICAL FIELD

This disclosure relates to the vehicle field, and more specifically, to an adjustment apparatus for a rearview mirror, a rearview mirror assembly, a transportation means, and an adjustment method for a rearview mirror.

### BACKGROUND

With popularization of vehicles, people gradually pay attention to intelligent vehicle control. A rearview mirror of a vehicle is an important component, can provide a driver with a field of view related to an environment and an object around the vehicle, and is an indispensable factor for ensuring safe driving of the vehicle. If the field of view provided by the rearview mirror of the vehicle is poor, driving control of the driver is affected, thereby affecting driving safety. The rearview mirror is usually adjusted by operating a knob in the vehicle or an operation interface on a center console. When a user operates the knob or the operation interface, a mirror surface of the rearview mirror rotates around a specific axis, to present different fields of view to the driver. In some conventional technologies, the rearview mirror may be adjusted in an electric manner, but adjustment precision is not high. Therefore, there are still many disadvantages. How to enable a user to adjust a rearview mirror of a vehicle more conveniently and precisely is a challenge faced by designers.

### SUMMARY

To adjust a field of view of a rearview mirror of a vehicle in a more appropriate manner, embodiments of this disclosure provide an adjustment apparatus for a rearview mirror, a rearview mirror assembly, a vehicle, and an adjustment method for a rearview mirror.

According to a first aspect of this disclosure, an adjustment apparatus for a rearview mirror is provided. The rearview mirror includes a mirror surface and a support supporting the mirror surface. The adjustment apparatus includes an input receiving module, a motor, a control module, and a position feedback module. The input receiving module is configured to receive at least one of a first input indicating adjustment of the mirror surface and a second input indicating adjustment of the support. The motor is configured to drive the mirror surface and the support to jointly rotate. The control module is coupled to the input receiving module and the motor, and is configured to drive, in response to the at least one input, the motor to rotate. The position feedback module is coupled to the motor, and is configured to: output first data to the control module in response to the motor rotating a predetermined angle based on the first input; and output second data different from the first data to the control module in response to the motor rotating the predetermined angle based on the second input.

According to the implementation of this disclosure, the position feedback module distinguishes between the adjustment of the mirror surface and the adjustment of the support, to apply different adjustment precision to the adjustment of the mirror surface and the adjustment of the support. High-precision adjustment of the mirror surface is implemented without changing recognition precision of a controller. Therefore, under a same precision condition, costs of a rearview mirror module can be reduced, thereby reducing costs of a vehicle.

In some implementations, the position feedback module includes a sliding rheostat, and the sliding rheostat includes a resistance adjustment region and a sliding block. The resistance adjustment region includes a first region and a second region that are adjacent to each other. The sliding block is configured to slide on the resistance adjustment region. The sliding block is further configured to: output the first data to the control module in response to the sliding block sliding a predetermined distance on the first region, and output the second data to the control module in response to the sliding block sliding the predetermined distance on the second region. In this manner, different adjustment precision may be implemented for the adjustment of the mirror surface and the adjustment of the support.

In some implementations, the first region has a higher resistance density than the second region. Because different resistance densities are set in the sliding rheostat, when the sliding block moves a same distance, signals output to the control module feed back different voltage changes. In this manner, when the sliding block slides on the first region, a resistance signal output to the control module may have high precision, and when the sliding block slides on the second region, a resistance signal output to the control module has low precision. Therefore, higher precision may be provided for the adjustment of the mirror surface, to improve accuracy of the adjustment of the mirror surface.

In some implementations, the first region and the second region are made of different materials. In this manner, the first region and the second region may be designed to reflect different resistances when the sliding block slides on the first region and the second region.

In some implementations, the resistance adjustment region further includes a third region, the first region is located between the second region and the third region, and the third region is configured to output third data different from the first data to the control module in response to the sliding block sliding the predetermined distance on the third region. In this manner, three regions are disposed, the second region and the third region correspond to the adjustment of the support at two ends, and the first region corresponds to the adjustment of the mirror surface in the middle. Through such a non-linear disposal, appropriate distribution of precision adjustment regions can be implemented.

In some implementations, the third region has a lower resistance density than the first region. In this manner, the first region having a higher resistance density is disposed in the middle, and the second region and the third region having lower resistance densities are disposed on two sides, to well correspond to adjustment of the rearview mirror, so as to ensure a good driving field of view of a driver.

In some implementations, the position feedback module includes a signal transmitting part, a signal receiving part, and a gear. The signal transmitting part is configured to transmit a signal. The signal receiving part is configured to receive the signal. The gear is coupled to the motor and includes a plurality of teeth, where the gear is disposed between the signal transmitting part and the signal receiving part, and is configured to enable the signal to be blocked by the plurality of teeth of the gear or to reach the signal receiving part through a tooth gap between the plurality of teeth. The gear includes a first gear section and a second gear section, and the first gear section and the second gear section have different gear tooth sizes and/or tooth gap sizes. In this manner, a duty cycle of the signal transmitted between the signal transmitting part and the signal receiving part may be changed, so that the position feedback module may implement different precision for the adjustment of the mirror surface and the support.

In some implementations, the signal includes a laser signal or an infrared signal. In this manner, the signal can be transmitted between the signal transmitting part and the signal receiving part in a cost-controllable and performance-stable manner.

In some implementations, the position feedback module includes a gear and a sensor. The gear is coupled to the motor and includes a first gear section and a second gear section, where the first gear section and the second gear section have different gear tooth sizes and/or tooth gap sizes. The sensor is disposed near the gear, and is configured to: sense a signal reflecting the gear tooth sizes and/or the tooth gap sizes of the first gear section and the second gear section, and transfer the corresponding signal to the control module. In this manner, precision distinguishing may be implemented in various manners, to increase an application scope of embodiments of this disclosure.

In some implementations, the control module is further configured to determine, based on a signal that is transferred by the position feedback module and that indicates a position of the motor, whether to stop the motor. In this manner, the rearview mirror can be precisely controlled.

According to a second aspect of this disclosure, a rearview mirror assembly is provided. The rearview mirror assembly includes a mirror surface, a support supporting the mirror surface, and the adjustment apparatus according to the first aspect of this disclosure.

According to a third aspect of this disclosure, a vehicle is provided. The vehicle includes the rearview mirror assembly according to the second aspect of this disclosure.

According to a fourth aspect of this disclosure, an adjustment method for a rearview mirror is provided. The rearview mirror includes a mirror surface and a support supporting the mirror surface, and the method includes: receiving at least one of a first input indicating adjustment of the mirror surface and a second input indicating adjustment of the support; driving, in response to the at least one input, a motor to rotate, where the motor is configured to drive the mirror surface and the support to jointly rotate; outputting first data in response to the motor rotating a predetermined angle based on the first input; and outputting second data different from the first data in response to the motor rotating the predetermined angle based on the second input.

These and other aspects of this disclosure are more concise and easier to understand in descriptions of the following (a plurality of) embodiments.

### BRIEF DESCRIPTION OF DRAWINGS

The foregoing and other features, advantages, and aspects of embodiments of this disclosure become more apparent with reference to accompanying drawings and the following detailed description. In the accompanying drawings, same or similar reference numerals represent same or similar elements. The accompanying drawings are not necessarily drawn in proportion.
FIG. 1 shows a use environment to which a solution according to an example embodiment of this disclosure may be applied;
FIG. 2 shows an adjustment apparatus for adjusting a rearview mirror according to an example embodiment of this disclosure;
FIG. 3 shows a feasible embodiment of a position feedback module in an adjustment apparatus according to an example embodiment of this disclosure;
FIG. 4 shows another feasible embodiment of a position feedback module in an adjustment apparatus according to an example embodiment of this disclosure; and
FIG. 5 shows an adjustment method for a rearview mirror according to an embodiment of this disclosure.

### DESCRIPTION OF EMBODIMENTS

Embodiments of this disclosure are described in more detail in the following with reference to accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

In the descriptions of embodiments of this disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

As described above, there are still many disadvantages in existing adjustment of a rearview mirror. A rearview mirror assembly of a vehicle generally includes a mirror surface and a support. Conventional adjustment of the rearview mirror is divided into two parts: adjustment of the support and adjustment of the mirror surface. For the adjustment of the support, functions of folding and unfolding the support of the rearview mirror are mainly implemented. This requires a horizontal motor disposed on a horizontal plane for adjustment, to control folding and unfolding of the support of the rearview mirror. For the adjustment of the mirror surface, in a conventional manner, a horizontal motor and a vertical motor are respectively disposed on a horizontal plane and a vertical plane to perform motion control, so as to respectively adjust rotation and a tilt of the mirror surface. However, this rearview mirror requires three motors in total, resulting a complex structure and high costs. In addition, it is difficult to implement miniaturization of the rearview mirror assembly.

In a conventional solution, a rearview mirror without a frame is further provided. This rearview mirror has a small size and an aesthetic appearance. In addition, due to a small wind resistance, the rearview mirror is particularly applicable to an electric vehicle, and can increase an endurance mileage of the electric vehicle. In this rearview mirror without a frame, to reduce the size, a horizontal motor used for adjustment of a mirror surface and a horizontal motor used for adjustment of a support are usually integrated together, and the two functions are implemented by using a same motor. However, in an actual operating scenario, a rotation amplitude of the support of the rearview mirror definitely needs to be greater than a rotation amplitude of the adjustment of the mirror surface, and angle control precision required for the adjustment of the mirror surface is definitely much higher than angle control precision required for folding and unfolding the support of the rearview mirror. Therefore, in the design in which horizontal rotation adjustment of the mirror surface and adjustment the support share a same horizontal rotation motor, when associated control circuits and feedback circuits are also separately the same, sharing a same horizontal adjustment mechanism definitely reduces angle control precision of the adjustment of the mirror surface.

In a conventional solution, some methods are further provided to attempt to resolve the problem of poor precision of the adjustment of the mirror surface mentioned above. For example, a solution adopted in the industry is to improve recognition precision of a controller, so as to implement high-precision adjustment. However, this solution does not distinguish between adjustment precision of the mirror surface and adjustment precision of the support of the rearview mirror, but improves both. Because a user has a low basic requirement on folding precision of the support of the rearview mirror, a precision waste exists in this solution to some extent, and consequently, costs of the controller of the rearview mirror are high. Because a requirement on the controller is high, design costs are increased, and a controller selection difficulty is further increased.

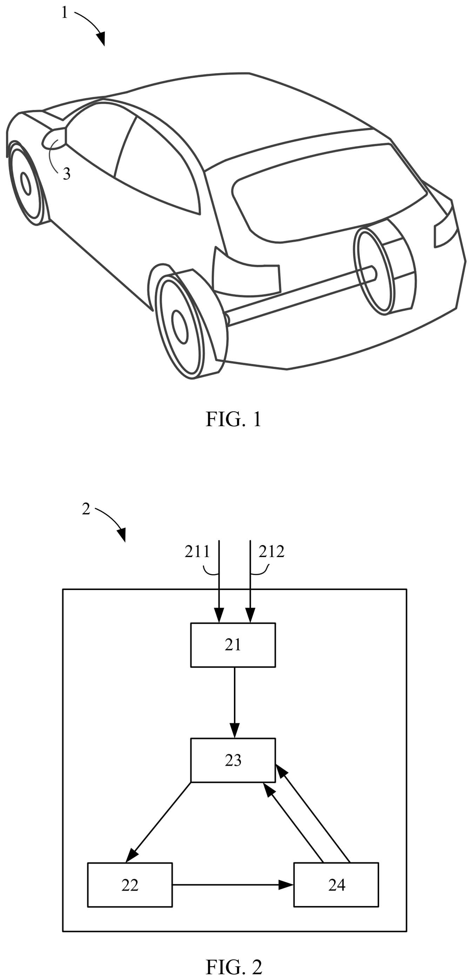

Therefore, to resolve at least the foregoing problem in the conventional technology and/or another potential problem, an embodiment of this disclosure provides an adjustment solution for a rearview mirror. Some example embodiments according to this disclosure are described below with reference to FIG. 1 to FIG. 5.

First, refer to FIG. 1. FIG. 1 is a diagram of a structure of a transportation means according to an embodiment of this disclosure. The transportation means is shown in a form of a vehicle 1 in the figure. It should be noted that, in the context of this disclosure, the term "transportation means" may be in various forms. The transportation means may be vehicles in various forms, for example, an electric vehicle or a fuel vehicle, or may be a hybrid vehicle. In some embodiments, the vehicle may be a car, a truck, a trailer, a motorcycle, a bus, an agricultural vehicle, an entertainment vehicle, a construction vehicle, or the like. In some embodiments, the transportation means may be a household vehicle, a passenger vehicle of an operational nature, a freight vehicle of an operational nature, or the like. In some embodiments, the transportation means may be a vehicle with a specific autonomous driving capability. The autonomous driving capability may include but is not limited to an assisted driving capability, a semi-autonomous driving capability, a highly autonomous driving capability, or a fully autonomous driving capability. In another embodiment, the transportation means may alternatively be aircrafts in various forms, for example, a passenger aircraft or a freight aircraft. In another embodiment, the transportation means may alternatively be in a form of a ship, a train, or the like. A specific form of the transportation means is not particularly limited in this disclosure.

As shown in FIG. 1, a vehicle 1 includes a rearview mirror 3 disposed on the vehicle, so that a driver of the vehicle 1 can observe an ambient environment through the rearview mirror 3. Although only one rearview mirror 3 is shown in the figure, it may be understood that the vehicle 1 may further include another rearview mirror 3 that is not shown. In another embodiment, the vehicle 1 may alternatively include rearview mirrors 3 of another quantity. In addition, the rearview mirror 3 may be a rearview mirror disposed outside the vehicle 1 shown in FIG. 1, or may be a rearview mirror disposed inside the vehicle. The vehicle 1 further includes an adjustment apparatus (not shown), configured to adjust a rotation angle of the rearview mirror 3.

FIG. 2 shows an adjustment apparatus 2 for adjusting the rearview mirror 3 according to an example embodiment of this disclosure. The rearview mirror 3 generally includes a mirror surface and a support supporting the mirror surface. In some embodiments, the support and the mirror surface are integrated, so that the support and the mirror surface can be jointly adjusted. Adjustment of the rearview mirror 3 may be implemented through two motors. A vertical motor is configured to adjust vertical rotation motions of the mirror surface and the support (namely, tilts of the mirror surface and the support), and a horizontal motor is configured to adjust a horizontal rotation motion of the mirror surface (namely, angle adjustment of the mirror surface) and a horizontal rotation motion of the support (namely, folding and unfolding of the support). The vertical motor and the horizontal motor are two independent motors. Through joint adjustment of the two motors, the support and the mirror surface can be adjusted to an appropriate angle for the driver. Embodiments of this disclosure mainly relate to adjustment performed by the horizontal motor.

As shown in the figure, the apparatus 2 includes an input receiving module 21. In some embodiments, the input receiving module 21 may be configured to receive a first input 211 indicating adjustment of the mirror surface. The first input 211 may be input by a user by using a button or a knob disposed inside the vehicle (for example, an inner side of a vehicle door), or may be input by the user by operating an operation interface disposed on a screen of a center console. In some other embodiments, the input receiving module 21 may be further configured to receive a second input 212 indicating adjustment of the support. Similar to the first input 211, the second input 212 may be input by the user by using the button or the knob disposed inside the vehicle, or may be input by the user by operating the operation interface disposed on the screen of the center console. In another embodiment, the input receiving module 21 may alternatively be configured to simultaneously receive a first input 211 indicating adjustment of the mirror surface and a second input 212 indicating adjustment of the support.

As shown in FIG. 2, the adjustment apparatus 2 further includes a motor 22. The motor 22 may rotate forward and reverse, and is configured to drive the mirror surface and the support to jointly rotate bidirectionally. In some embodiments, the motor 22 may be a horizontal motor in the rearview mirror assembly, and is configured to control bidirectional angle adjustment of the mirror surface and folding and unfolding of the support. A specific type of the motor 22 is not particularly limited in embodiments of this disclosure.

As shown in the figure, the adjustment apparatus 2 further includes a control module 23 and a position feedback module 24 coupled to the control module 23. The control module 23 is coupled to the input receiving module 21 and the motor 22. The control module 23 may drive, based on the first input 211 and/or the second input 212 received from the input receiving module 21, the motor 22 to bidirectionally rotate. It should be noted that the control module 23 may be integrated into a vehicle body controller, or may be an independent control module 23 used for the rearview mirror. This is not particularly limited in embodiments of this disclosure. The position feedback module 24 is coupled to the motor 22, and the position feedback module 24 may learn a current rotation amount of the motor 22. The rotation amount of the motor 22 is associated with current positions (namely, rotation angles) of the mirror surface and the support of the rearview mirror. The position feedback module 24 can feed back the positions to the control module 23 by using a signal. The control module 23 can recognize the signal from the position feedback module 24, and perform logical determining based on the signal to determine when to stop the motor 22. The control module 23 may control the motor 22 to stop at a predetermined position, so that the rearview mirror 3 can be adjusted to a predetermined angle, thereby implementing adjustment of the rearview mirror 3. In some embodiments, the signal fed back by the position feedback module 24 to the control module 23 may be a voltage signal. In some other embodiments, such a signal may be a resistor signal. Optionally, in another embodiment, the signal may be a current signal. A specific signal form is not limited by embodiments of this disclosure.

The control module 23 has specific recognition precision, and only a signal that meets the corresponding recognition precision can be accurately recognized by the control module 23. For example, when a minimum variation of a voltage signal that can be recognized by the control module 23 is 0.05 V, if an actual variation is 0.50 V or 1.00 V, the variation is accurately recognized. If an actual variation is 0.51 V or 1.05 V, the variation can only be approximately recognized as 0.50 V or 1.00 V due to precision limitation. As a result, a recognition result is not completely accurate. Therefore, when the recognizable minimum variation is 0.05 V, a voltage variation can be accurately recognized only when an amplitude of the variation is 0.05 V or the variation is an integer multiple of 0.05 V, and recognition of other variations is only approximately accurate.

As mentioned above, an existing solution is to improve recognition precision of the control module 23, for example, improve the recognition precision from 0.05 V to 0.01 V. Although this design can improve recognition precision, costs are high. In this embodiment of this disclosure, the recognition precision of the control module 23 is not changed, but the position feedback module 24 is improved. When the recognition precision remains unchanged, a physical quantity (for example, a displacement or an angle) of the position feedback module 24 corresponding to the recognition precision is reduced, so that a change with a smaller amplitude of the position feedback module 24 can be recognized. In this way, angle adjustment with higher precision of the rearview mirror 3 can also be implemented. In this embodiment of this disclosure, the position feedback module 24 has different feedbacks on the adjustment of the mirror surface and the adjustment of the support. Specifically, the position feedback module 24 distinguishes between the adjustment of the mirror surface and the adjustment of the support, to apply different adjustment precision to the adjustment of the mirror surface and the adjustment of the support. Therefore, precise adjustment of the rearview mirror 3 can be implemented through appropriate precision allocation without increasing costs of the control module 23.

Specifically, the position feedback module 24 may output first data to the control module 23 based on the motor 22 rotating a predetermined angle α based on the first input 211. The position feedback module 24 outputs second data different from the first data to the control module 23 based on the motor 22 rotating the predetermined angle α based on the second input 212. In other words, for the same motor rotation angle α, based on whether the motor rotation angle is based on the first input 211 used for the adjustment of the mirror surface or the second input 212 used for the adjustment of the support, the position feedback module 24 may output different values, to reflect different adjustment precision. The position feedback module 24 may use a plurality of different specific forms, which are described in detail below.

In a possible use scenario, when the vehicle 1 is parked, the rearview mirror 3 is in a position of being fully collected. If the vehicle 1 needs to be driven in this case, the user operates the knob of the vehicle 1 or the screen on the central control console to unfold the support and the mirror surface of the rearview mirror 3. In this case, the rearview mirror is just unfolded from the position of being fully collected, and is not in an effective operating angle range. Therefore, the user does not have a high requirement on angle adjustment precision at an initial stage of adjustment. In this case, a rotation amplitude of the rearview mirror 3 may be large, so that the rearview mirror 3 can quickly rotate from the position of being fully collected to the effective operating angle range. As the rearview mirror 3 starts to enter the effective operating angle range, the user has a higher requirement on angle adjustment precision of the rearview mirror 3, and the rearview mirror 3 needs to be adjusted more precisely. In this case, a rotation amplitude of the rearview mirror 3 becomes small.

According to this embodiment of this disclosure, the specially designed position feedback module 24 is used, to distinguish between the adjustment of the support and the adjustment of the mirror surface for the rearview mirror, so that when the user adjusts the rearview mirror 3, the adjustment of the support and the adjustment of the mirror surface may have different adjustment precision. In this embodiment of this disclosure, high-precision adjustment of the mirror surface of the rearview mirror can be implemented without changing the recognition precision of the control module 23.

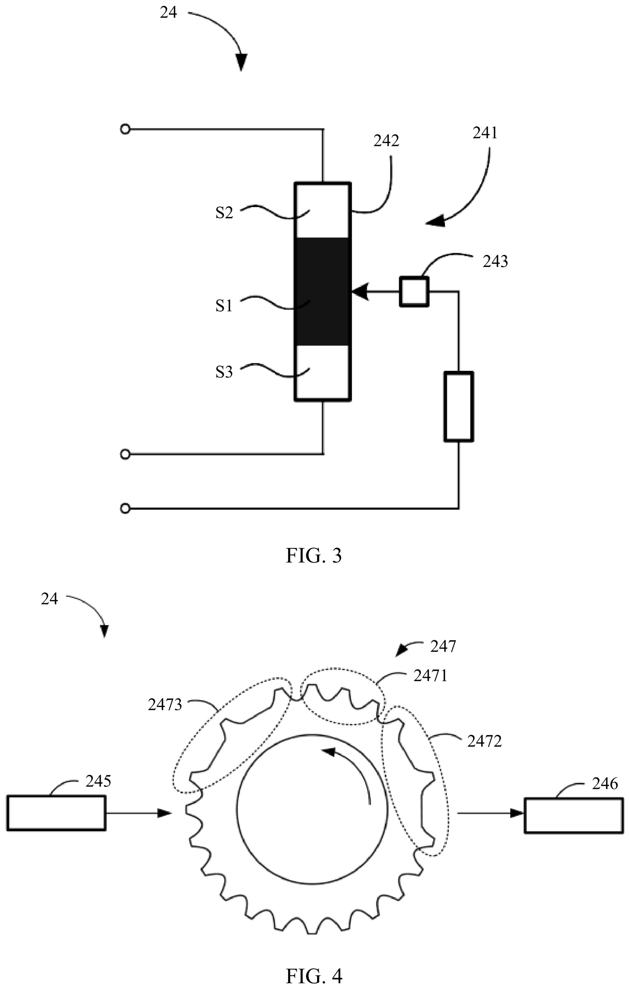

FIG. 3 shows a feasible embodiment of the position feedback module 24 in the adjustment apparatus according to an example embodiment of this disclosure. In the embodiment shown in FIG. 3, the position feedback module 24 includes a sliding rheostat 241. The sliding rheostat 241 includes a resistance adjustment region 242 and a sliding block 243 that can slide on the resistance adjustment region 242. The sliding block 243 may be coupled to the motor 22, so that rotation of the motor 22 drives the sliding block 243 to slide on the resistance adjustment region 242. The resistance adjustment region 242 includes a first region S1 and a second region S2 that are adjacent to each other. The first region S1 and the second region S2 are designed to reflect different resistances to the control module 23 when the sliding block 243 slides on the first region S1 and the second region S2, so that the control module 23 can have different adjustment precision for the adjustment of the mirror surface and the adjustment of the support. In some embodiments, the first region S1 and the second region S2 may have different resistance densities. For example, a resistance density of the first region S1 is higher than a resistance density of the second region S2, so that when the sliding block 243 slides a same predetermined distance, different first data and second data may be output on the first region S1 and the second region S2 respectively, to feed back different voltage changes. Specifically, when the sliding block 243 slides on the first region S1, because the resistance density of the first region S1 is higher, when the sliding block 243 slides a specific distance D, a large change of a feedback signal may be generated in a circuit connected to the sliding rheostat 241, and a resistance signal output to the control module 23 may have higher precision. This corresponds to the adjustment of the mirror surface of the rearview mirror. When the sliding block 243 slides on the second region S2, because the resistance density of the second region S2 is lower, when the sliding block 243 slides the same distance D, a smaller change of a feedback signal is generated in the circuit connected to the sliding rheostat 241, and a resistance signal output to the control module 23 has lower precision. This corresponds to the adjustment of the support of the rearview mirror.

In some other embodiments, the first region S1 and the second region S2 may be made of different materials. It should be noted that another solution may be further envisaged to enable the first region S1 and the second region S2 to be designed to reflect different resistances when the sliding block 243 slides on the first region S1 and the second region S2. This is not particularly limited in embodiments of this disclosure.

According to the embodiment described herein, the resistance adjustment region 242 of the position feedback module 24 is divided based on the adjustment of the support and the adjustment of the mirror surface of the rearview mirror 3, and position feedback circuits of different precision are used for different parts, so that high-precision adjustment is implemented in a horizontal direction of the mirror surface when the adjustment of the mirror surface of the rearview mirror 3 and the adjustment of the support of the rearview mirror share the motor.

As shown in FIG. 3, the resistance adjustment region 242 further includes a third region S3, and the first region S1 is located between the second region S2 and the third region S3. The third region S3 is configured to output third data different from the first data to the control module 23 in response to the sliding block sliding a predetermined distance on the third region. In some embodiments, a resistance density of the third region S3 is lower than the resistance density of the first region S1. In the adjustment process of the rearview mirror 3, when the rearview mirror 3 is gradually unfolded from the position of being fully collected, in an entire travel range of the rearview mirror, the adjustment of the support in the front and rear parts requires low precision, and the adjustment of the mirror surface in the middle part requires high precision. Therefore, the adjustment of the mirror surface that requires precise adjustment is usually located in a middle stage of the adjustment process, and the adjustment of the support that has a low precision requirement is located at two ends (namely, an early stage and a late stage) of an adjustment range. Therefore, the first region S1 having a higher resistance density is disposed in the middle, and the second region S2 and the third region S3 having lower resistance densities are disposed on two sides, to well correspond to adjustment of the rearview mirror, so as to ensure a good driving field of view of a driver.

In some embodiments, a precision ratio of the adjustment of the mirror surface to the adjustment of the support may be adjusted by adjusting resistance distribution in the regions S1, S2, and S3. For example, in some embodiments, precision of the adjustment of the mirror surface may be 2.8 times precision of the adjustment of the support. It should be noted that ranges of the regions S1, S2, and S3 in the resistance adjustment region shown in FIG. 3 are merely an example, rather than a limitation. The ranges of these regions can be adjusted based on an actual requirement. A specific range is not limited in embodiments of this disclosure.

According to this embodiment of this disclosure, the control module 23 drives the motor 22 to rotate bidirectionally, so as to drive the mirror surface and the support of the rearview mirror to jointly rotate. A position change of the motor 22 triggers a resistance change of the sliding rheostat 241 in the position feedback module 24. The control module 23 can recognize, based on a signal that is transferred by the position feedback module 24 and that indicates a position of the motor 22, a change of the position, and control the motor 22 to stop and prompt the user when necessary.

FIG. 4 shows another feasible embodiment of the position feedback module 24 in the adjustment apparatus according to an example embodiment of this disclosure. In the embodiment shown in FIG. 4, the position feedback module 24 includes a signal transmitting part 245 configured to transmit a signal, a signal receiving part 246 configured to receive the signal, and a gear 247 disposed between the signal transmitting part 245 and the signal receiving part 246. As shown in the figure, the gear 247 has a plurality of teeth, and signal transmission between the signal transmitting part 245 and the signal receiving part 246 is affected by these teeth. For example, a signal transmission path between the signal transmitting part 245 and the signal receiving part 246 may be disposed near a wheel edge of the gear 247, so that when a signal is blocked by the tooth of the gear 247, signal transfer between the signal transmitting part 245 and the signal receiving part 246 is interrupted, and the signal receiving part 246 cannot receive the signal from the signal transmitting part 245. Alternatively, as the gear 247 rotates, when a signal passes through a tooth gap between the teeth of the gear 247, the signal may smoothly reach the signal receiving part 246. According to this design, signals received by the signal receiving part 246 are intermittent signals, and duty cycles of these signals are affected by a gear tooth size and/or a tooth gap size of the gear 247. The gear tooth size herein may include parameters such as a tooth distance, a tooth thickness, a tooth height, a tooth top height, and a tooth root height of the gear tooth. The tooth gap size herein may refer to a gap between adjacent teeth.

As shown in FIG. 4, the gear teeth on the gear 247 are not equidistant. Specifically, the gear 247 may include a first gear section 2471 and a second gear section 2472 that are adjacent to each other. In some embodiments, a tooth gap size of the first gear section 2471 may be different from a tooth gap size of the second gear section 2472. For example, in the illustrated embodiment, the first gear section 2471 has a smaller tooth gap size, and the second gear section 2472 has a larger tooth gap size. According to this setting, as the gear 247 rotates, when the first gear section 2471 rotates to the signal transmission path, a duty cycle of a signal is different from a duty cycle obtained when the second gear section 2472 rotates to the signal transmission path. In some other embodiments, a gear tooth size of the first gear section 2471 may be different from a gear tooth size of the second gear section 2472. According to this setting, similar to the foregoing described difference in the tooth gap size, the difference in the gear tooth size also causes a change in the duty cycle of the signal transmitted between the signal transmitting part 245 and the signal receiving part 246, so that the position feedback module 24 may implement different precision for adjustment of the mirror surface and the support.

As shown in FIG. 3, a third gear section 2473 may be further disposed on the gear 247, and is located on a side that is of the first gear section 2471 and that is opposite to the second gear section 2472, so that the first gear section 2471 is located between the second gear section 2472 and the third gear section 2473. In the three gear sections, the first gear section 2471 may have a denser gear tooth distribution than the other two sections, because when the rearview mirror 3 is gradually unfolded from the position of being fully collected, in the entire travel range of the rearview mirror, the adjustment of the support in the front and rear parts requires lower precision, and the adjustment of the mirror surface in the middle part requires higher precision.

In some embodiments, the signal may be a laser signal. In some other embodiments, the signal may be an infrared signal. Certainly, this is merely an example, and another type of signal is also feasible. This may be adjusted based on a specific use environment and a design requirement. Such an embodiment also falls within the scope of this disclosure.

In some other embodiments, the position feedback module 24 may further include a sensor disposed near the gear 247. The sensor may sense a signal reflecting the gear tooth sizes and/or the tooth gap sizes of the first gear section 2471 and the second gear section 2472, and transfer the corresponding signal to the control module 23. In some embodiments, such a sensor may be a Hall sensor. The Hall sensor is sensitive to the magnetic field, and therefore can sense positive and negative electrodes of the magnetic field. A positive-negative change of the magnetic field forms a pulse, and a quantity of pulses is used to calculate a stroke. Therefore, position feedbacks of different precision can be implemented through different gap densities of the gear.

The foregoing describes in detail some specific embodiments of the position feedback module 24. It should be noted that, certainly, these detailed solutions listed herein are merely examples, but not limitation. A specific solution is not limited in embodiments of this disclosure. In another embodiment, the position feedback module 24 may alternatively be another chip or circuit having a feedback function. Another form of the position feedback module 24 that is not listed in the specification may also be envisaged, provided that the position feedback module can feed back the position of the motor 22 to the control module 23 in a distinguishing manner.

This disclosure further relates to a rearview mirror assembly. The rearview mirror assembly includes a mirror surface, a support supporting the mirror surface, and the adjustment apparatus 2 for adjusting the rearview mirror described above. This disclosure further relates to a vehicle 3. The vehicle includes the rearview mirror assembly described above. The vehicle may be in various forms. This is not particularly limited in embodiments of this disclosure.

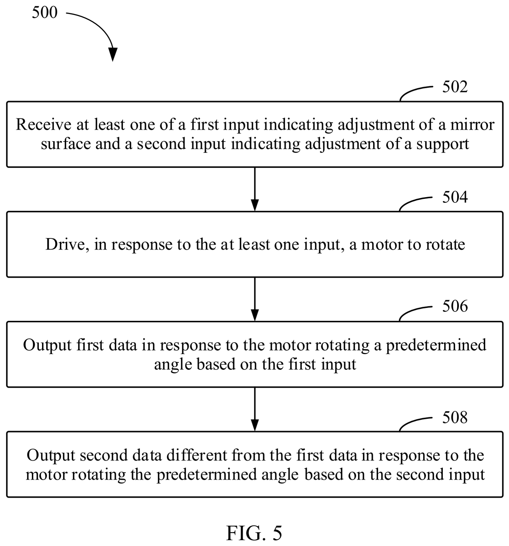

This disclosure further relates to an adjustment method for a rearview mirror. FIG. 5 shows an adjustment method 500 according to an embodiment of this disclosure. In a block 502, at least one of a first input 211 indicating adjustment of a mirror surface and a second input 212 indicating adjustment of a support is received. In a block 504, in response to the at least one input, a motor 22 is driven to rotate, where the motor 22 is configured to drive the mirror surface and the support to jointly rotate. In a block 506, first data is output in response to the motor 22 rotating a predetermined angle α based on the first input 211. In a block 508, second data different from the first data is output in response to the motor 22 rotating the predetermined angle α based on the second input 212.

It should be understood that the method 500 described herein may be used together with the apparatus 2 for adjusting the rearview mirror 3 described above, and specific details in the apparatus 2 may also be used together with the method 500 described herein. For brevity, more details of the method are not described herein.

In comparison with a conventional solution in which adjustment of a mirror surface and adjustment of a bracket are not distinguished, in embodiments of this disclosure, higher adjustment precision is set for a region corresponding to the adjustment of the mirror surface, and lower adjustment precision is set for a region corresponding to the adjustment of the support, so that high-precision adjustment of the mirror surface of the rearview mirror 3 can be implemented without changing recognition precision of a controller. Therefore, under a same precision condition, costs of a rearview mirror module can be reduced, thereby reducing costs of a vehicle.

It should be noted that a type of the rearview mirror is not particularly limited in embodiments of this disclosure. Embodiments of this disclosure may be applied to a conventional rearview mirror with a frame, and may also be applied to a rearview mirror without a frame.

It should be understood that steps may be reordered, added, or deleted by using the foregoing various forms of processes. For example, the steps described in this disclosure may be performed in parallel, may be sequentially performed, or may be performed in a different order, provided that an expected result of the technical solutions of this disclosure can be implemented. This is not limited herein.

Although the subject matter is described in a language specific to structural features and/or method logic actions, it should be understood that the subject matter defined in the appended claims is not necessarily limited to the particular features or actions described above. On the contrary, the particular features and actions described above are merely example forms for implementing the claims.

## Claims

1. An adjustment apparatus for a rearview mirror, wherein the rearview mirror comprises a mirror surface and a support supporting the mirror surface, and the adjustment apparatus comprises:
an input receiving module, configured to receive at least one of a first input indicating adjustment of the mirror surface and a second input indicating adjustment of the support;
a motor, configured to drive the mirror surface and the support to jointly rotate;
a control module, coupled to the input receiving module and the motor, and configured to drive, in response to the at least one input, the motor to rotate; and
a position feedback module, coupled to the motor and configured to:
output first data to the control module in response to the motor rotating a predetermined angle based on the first input; and
output second data different from the first data to the control module in response to the motor rotating the predetermined angle based on the second input.

2. The adjustment apparatus according to claim 1, wherein the position feedback module comprises a sliding rheostat, and the sliding rheostat comprises:
a resistance adjustment region, comprising a first region and a second region that are adjacent to each other; and
a sliding block, configured to slide on the resistance adjustment region, and configured to:
output the first data to the control module in response to the sliding block sliding a predetermined distance on the first region; and
output the second data to the control module in response to the sliding block sliding the predetermined distance on the second region.

3. The adjustment apparatus according to claim 2, wherein the first region has a higher resistance density than the second region.

4. The adjustment apparatus according to claim 2 or 3, wherein the first region and the second region are made of different materials.

5. The adjustment apparatus according to any one of claims 2 to 4, wherein the resistance adjustment region further comprises a third region, the first region is located between the second region and the third region, and the third region is configured to output third data different from the first data to the control module in response to the sliding block sliding the predetermined distance on the third region.

6. The adjustment apparatus according to claim 5, wherein the third region has a lower resistance density than the first region.

7. The adjustment apparatus according to claim 1, wherein the position feedback module comprises:
a signal transmitting part, configured to transmit a signal;
a signal receiving part, configured to receive the signal; and
a gear, coupled to the motor and comprising a plurality of teeth, wherein the gear is disposed between the signal transmitting part and the signal receiving part, and is configured to enable the signal to be blocked by the plurality of teeth of the gear or to reach the signal receiving part through a tooth gap between the plurality of teeth, wherein
the gear comprises a first gear section and a second gear section, and the first gear section and the second gear section have different gear tooth sizes and/or tooth gap sizes.

8. The adjustment apparatus according to claim 7, wherein the signal comprises a laser signal or an infrared signal.

9. The adjustment apparatus according to claim 1, wherein the position feedback module comprises:
a gear, coupled to the motor and comprising a first gear section and a second gear section, wherein the first gear section and the second gear section have different gear tooth sizes and/or tooth gap sizes; and
a sensor, disposed near the gear, and configured to: sense a signal reflecting the gear tooth sizes and/or the tooth gap sizes of the first gear section and the second gear section, and transfer the corresponding signal to the control module.

10. The adjustment apparatus according to any one of claims 1 to 9, wherein the control module is further configured to:
determine, based on a signal that is transferred by the position feedback module and that indicates a position of the motor, whether to stop the motor.

11. A rearview mirror assembly, comprising:
a mirror surface;
a support supporting the mirror surface; and
the adjustment apparatus according to any one of claims 1 to 10.

12. A transportation means, comprising the rearview mirror assembly according to claim 11.

13. An adjustment method for a rearview mirror, wherein the rearview mirror comprises a mirror surface and a support supporting the mirror surface, and the method comprises:
receiving at least one of a first input indicating adjustment of the mirror surface and a second input indicating adjustment of the support;
driving, in response to the at least one input, a motor to rotate, wherein the motor is configured to drive the mirror surface and the support to jointly rotate;
outputting first data in response to the motor rotating a predetermined angle based on the first input; and
outputting second data different from the first data in response to the motor rotating the predetermined angle based on the second input.
